# EUROPÄISCHE PATENTSCHRIFT

(11) **EP 0 842 985 B1**
(45) Veröffentlichungstag und Bekanntmachung des Hinweises auf die Patenterteilung: **03.05.2000**
(21) Anmeldenummer: 97118209.2
(22) Anmeldetag: 21.10.1997
(51) Int. Cl.: C08L 71/12, C08L 53/02, C08L 25/04, C08K 5/51

(54) **Thermooxidationsstabile thermoplastische Formmassen**
Thermooxidation resistant thermoplastic moulding masses
Masses de moulage thermoplastiques résistant à l'oxydation thermique

(30) Priorität: 15.11.1996 DE 19647297
(43) Veröffentlichungstag der Anmeldung: 20.05.1998
(73) Patentinhaber: BASF AKTIENGESELLSCHAFT, 67056 Ludwigshafen (DE)
(72) Erfinder: Weber, Martin, Dr., 67487 Maikammer (DE); Reinhardt, Hans Joachim, 67473 Lindenberg (DE); Seibring, Joachim, Dr., 67251 Freinsheim (DE)

(56) Entgegenhaltungen:
- EP-A- 0 036 278
- EP-A- 0 038 183
- EP-A- 0 183 195
- EP-A- 0 635 548
- GB-A- 2 215 727
- GB-A- 2 227 490

## Beschreibung

Die Erfindung betrifft thermoplastische Formmassen, enthaltend
- A) 5 bis 97,9 Gew.-%: eines Polyphenylenethers,
- B) 1 bis 93,9 Gew.-%: an schlagfestmodifizierten Polystyrolen oder Copolymeren aus Styrol und anderen vinylaromatischen Verbindungen,
- C) 1 bis 50 Gew.-%: an natürlichen oder synthetischen Kautschuken mit Glasübergangstemperaturwerten von -100 bis +25°C,
- D): eine Stabilisatormischung aus
d₁) 0,05 bis 3 Gew.-% mindestens eines sterisch gehinderten Phenols,
d₂) 0,05 bis 3 Gew.-% mindestens eines Phosphonits und
d₃) 0,01 bis 4 Gew.-% an Diisodecylphenylphosphit,
- E) 0 bis 70 Gew.-%: eines Polyamids sowie
- F) 0 bis 60 Gew.-%: weiterer Zusatzstoffe und Verarbeitungshilfsmittel,
wobei die Summe der Gewichtsprozente der Komponenten A) bis F) 100 % ergibt.

Weiterhin betrifft die Erfindung die Verwendung der erfindungsgemäßen Formmassen zur Herstellung von Fasern, Folien und Formkörpern sowie die hierbei erhältlichen Fasern, Folien und Formkörper.

Polymermischungen aus Polyphenylenethern (PPE) und vinylaromatischen Polymeren sind seit langem bekannt, siehe z.B. US 3 383 435, US 4 128 602 und US 4 128 603.

Derartige Blends werden vielfach für Außenanwendungen eingesetzt, z.B. als Gehäusematerial für den Elektro- und Elektronikbereich. Hierfür ist eine wirksame Stabilisierung gegenüber Wärme und Licht erforderlich. Da die Miniaturisierung elektronischer Bauteile und Schaltungen zunimmt, werden die Anforderungen für die entsprechenden Gehäusematerialien immer größer, da auch sehr kleine Bauteile eine ausreichend hohe Thermooxidationsstabilität aufweisen sollen.

Zur Wärmestabilisierung von Polymerblends aus Polyphenylenether und Polystyrol sind eine Reihe von Schriften bekannt. In der US 4 255 321 werden beispielsweise Mischungen aus einem Metallsulfid, einem Metalloxid und einem Phosphit zur Wärmestabilisierung von PPE/HIPS-Blends verwendet.

Gegenstand der DE-A 26 54 841 sind thermoplastische Formmassen auf Basis von Polyphenylenethern und schlagfestem Polystyrol, deren Thermostabilität durch Zusatz eines sekundären aromatischen Amins, bzw. durch Kombinationen des Amins mit Sulfiden und/oder Phosphiten verbessert wird.

Die Verwendung sterisch gehinderter Amine in Kombination mit Phosphiten, Benztriazolen oder sterisch gehinderten Phenolen zur UV- und Wärmestabilisierung von PPE/HIPS-Blends ist Gegenstand der WO 81/02021.

Aus der Literatur war weiterhin bekannt, daß Mischungen aus sterisch gehinderten Phenolen und Phosphoniten Formmassen aus Polyphenylenether und schlagfestem Polystyrol wirkungsvoll gegenüber Wärmealterung schützen (z.B. EP 36 278, EP-A 38 183).

EP-A-36278 offenbart Zusammensetzungen aus Polyphenylenether, vinylaromatischen Polymeren, Styrol-Butadien-Elastomeren, einem Phosphonit, einem Phosphit und einem sterisch gehinderten Phenol.

Thermoplastische Formmassen aus Polyphenylenether und -sulfid enthaltend ein Alkylarylphosphit, ein Arylphosphit, ein Di-phosphit oder ein Phosphonit werden in EP-A 635 548 beschrieben.

Gegenstand der US 4 483 953 sind thermoplastische Formmassen aus PPE und HIPS, die durch ein Stabilisatorsystem aus ZnS, ZnO und einem speziellen Di-Phosphit gegen Wärme stabilisiert sind. Die Wirkung des Di-Phosphits wird jedoch nur anhand der bei der Verarbeitung auftretenden Verfärbung belegt. Die Verbesserung der Farbstabilität thermoplastischer Formmassen aus Polyphenylenether und HIPS ist Gegenstand der EP-A 243 761. Durch Mischungen aus Triarylphosphaten und Alkyl-arylphosphiten ergibt sich hierbei eine bessere Farbqualität nach UV-Lagerung.

Der vorliegenden Erfindung lag daher die Aufgabe zugrunde, thermoplastische Formmassen zur Verfügung zu stellen, welche eine sehr gute Thermooxidationsbeständigkeit, Fließfähigkeit und eine gute Zähigkeit aufweisen.

Diese kombinierten Eigenschaften sollten auch Mini-Bauteile aufweisen. Weiterhin lag der Erfindung die Aufgabe zugrunde, eine Stabilisatorkombination zur Verfügung zu stellen, welche eine gute Zähigkeit, insbesondere eine gute Tieftemperaturzähigkeit in den PPE-Blends gewährleistet, welche möglichst unabhängig vom eingesetzten Schlagzähmodifier sein sollte.

Diese Aufgabe wird durch die eingangs definierten Formmassen gelöst.

Bevorzugte Massen dieser Art und ihre Verwendung sind den Unteransprüchen zu entnehmen.

### Komponente A

Die Polyphenylenether A sind in den Zusammensetzungen erfindungsgemäß in einer Menge von 5 bis 97,9, bevorzugt von 15 bis 88, insbesondere von 20 bis 83 Gew.-%, bezogen auf die gesamte Zusammensetzung, enthalten.

Die Polyphenylenether A sind an sich bekannt. Es handelt sich um Verbindungen auf Basis von substituierten, insbesondere disubstituierten Polyphenylethern, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome wie Chlor oder Brom und Alkylreste mit 1 bis 4 Kohlenwasserstoffatomen, die vorzugsweise kein α-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Beispiele für Polyphenylenether A sind
Poly(2,6-dilauryl-1,4-phenylenether),
Poly(2,6-diphenyl-1,4-phenylenether),
Poly(2,6-dimethoxy-1,4-phenylenether),
Poly(2,6-diethoxy-1,4-phenylenether),
Poly(2-methoxy-6-ethoxy-1,4-phenylenether),
Poly(2-ethyl-6-stearyloxy-1,4-phenylenether),
Poly(2,6-dichlor-1,4-phenylenether),
Poly(2-methyl-6-phenyl-1,4-phenylenether),
Poly(2,6-dibenzyl-1,4-phenylenether),
Poly(2-ethoxy-1,4-phenylenether),
Poly(2-chlor-1,4-phenylenether),
Poly(2,5-dibrom-1,4-phenylenether).

Bevorzugt werden Polyphenylenether eingesetzt, bei denen die Substituenten Alkylreste mit 1 bis 4 Kohlenstoffatomen sind, wie Poly(2,6-dimethyl-l,4-phenylenether),
Poly(2,6-diethyl-1,4-phenylenether),
Poly(2-methyl-6-ethyl-1,4-phenylenether),
Poly(2-methyl-6-propyl-1,4-phenylenether),
Poly(2,6-dipropyl-1,4-phenylenether) und
Poly(2-ethyl-6-propyl-1,4-phenylenether).

Unter Polyphenylenethern im Sinne der Erfindung sollen auch solche verstanden werden, die mit Monomeren wie Fumarsäure, Maleinsäure oder Maleinsäureanhydrid modifiziert sind.

Derartige Polyphenylenether sind u.a. in der WO 87/00540 beschrieben, welche insbesondere für Mischungen von PPE mit einem Polyamid geeignet sind.

Hinsichtlich der physikalischen Eigenschaften der Polyphenylenether werden solche in den Zusammensetzungen eingesetzt, die ein mittleres Molekulargewicht M_{w} (Gewichtsmittel) von 8 000 bis 70 000, bevorzugt 12 000 bis 50 000 und insbesondere 20 000 bis 49 000 aufweisen.

Dies entspricht einer Grenzviskosität von 0,18 bis 0,7, bevorzugt von 0,25 bis 0,55, und insbesondere von 0,30 bis 0,54 dl/g, gemessen in Chloroform bei 25°C.

Die Bestimmung der Molekulargewichtsverteilung erfolgt im allgemeinen mittels Gelpermeationschromatograhpie (Shodex-Trennsäulen 0,8 x 50 cm des Typs A 803, A 804 und A 805 mit THF als Elutionsmittel bei Raumtemperatur). Die Lösung der Polyphenylenether-Proben in THF erfolgt unter Druck bei 110°C, wobei 0,16 ml einer 0,25 gew.-%igen Lösung injiziert werden.

Die Detektion erfolgt im allgemeinen mit einem UV-Detektor. Die Eichung der Säulen wurde mit Polyphenylenether-Proben durchgeführt, deren absolute Molekulargewichtsverteilungen durch eine GPC-Laser-Lichtstreuungskombination bestimmt wurden.

### Komponente B

Die Komponente B ist in den Zusammensetzungen erfindungsgemäß in Mengen von 1 bis 93,9, bevorzugt von 10 bis 83, insbesondere von 15 bis 78 Gew.-%, bezogen auf das Gesamtgewicht der Zusammensetzung, enthalten.

Geeignete Komponenten B sind vor allem schlagfestmodifizierte Polystyrole oder Copolymere aus Styrol und anderen vinylaromatischen Verbindungen. Derartige schlagzähmodifizierte Polystyrole sind allgemein als sogenanntes HIPS bekannt und größtenteils im Handel erhältlich und weisen eine Viskositätszahl (VZ) der Hartmatrix von 50 bis 130 ml/g (0,5 %ig in Toluol bei 23°C) auf, vorzugsweise von 60 bis 90 ml/g.

Als monovinylaromatische Verbindungen kommen dabei kern- oder seitenkettenalkylierte Styrole in Betracht. Als Beispiele seien Chlorstyrol, α-Methylstyrol, p-Methylstyrol, Vinyltoluol und p-t-Butylstyrol genannt. Vorzugsweise wird jedoch Styrol allein verwendet.

Die Homopolymerisate werden im allgemeinen nach den bekannten Verfahren in Masse, Lösung oder Suspension hergestellt (vgl. Ullmans Enzyklopädie der techn. Chemie, Band 19, Seiten 265 bis 272, Verlag Chemie, Weinheim 1980). Die Homopolymerisate können Gewichtsmittel des Molekulargewichts M_{w} von 3 000 bis 300 000 aufweisen, die nach üblichen Methoden bestimmt werden können.

Als Comonomere zur Herstellung von Copolymerisaten kommen z.B. (Meth)acrylsäure, (Meth)acrylsäurealkylester mit 1 bis 4 C-Atomen im Alkylrest, Acrylnitril und Maleinsäureanhydrid sowie Maleinsäureimide, Acrylamid und Methacrylamide sowie deren N,N- oder N-alkylsubstituierten Derivate mit 1 bis 10 C-Atomen im Alkylrest in Frage.

Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in der US-P 4 360 618, 4 405 753 und in der Veröffentlichung von J.R. Fried, G.A. Hanna, Polymer Eng. Scie., Band 22 (1982), Seite 705 ff beschrieben. Die Herstellung der Copolymeren erfolgt nach bekannten Verfahren, die beispielsweise in Ullmanns Enzyklopädie der techn. Chemie, Band 19, Seite 273 ff, Verlag Chemie, Weinheim (1980), beschrieben sind. Die Copolymerisate haben im allgemeinen Gewichtsmittel des Molekulargewichtes (M_{w}) von 10 000 bis 300 000, die nach üblichen Methoden bestimmt werden können.

Bei der Komponente B handelt es sich vorzugsweise um schlagfest modifiziertes Polystyrol.

Die meist angewandten Verfahren zur Herstellung schlagzähmodifizierter Styrolpolymerisate sind die Polymerisation in Masse oder Lösung in Gegenwart eines Kautschuks, wie es beispielsweise in der US-Patentschrift 2 694 692 beschrieben ist, und Verfahren zur Massesuspensionspolymerisation, wie sie beispielsweise in der US-Patentschrift 2 862 906 beschrieben sind. Selbstverständlich sind auch andere Verfahren anwendbar, sofern die gewünschte Teilchengröße der Kautschukphase eingestellt wird.

### Komponente C

Die Komponente C (oft auch als Elastomere oder Schlagzähmodifier bezeichnet) ist erfindungsgemäß von 1 bis 50 Gew.-%, bezogen auf die gesamte Zusammensetzung, in den Zusammensetzungen enthalten. Bevorzugte Zusammensetzungen enthalten von 1 bis 25, insbesondere von 1 bis 20 Gew.-% der Komponente C, welche verschieden von Komponente B) ist.

Als Komponente C können natürliche oder synthetische Kautschuke eingesetzt werden. Neben Naturkautschuk sind als Schlagzähmodifier z.B. Polybutadien, Polyisopren oder Mischpolymerisate des Butadiens und/oder Isoprens mit Styrol und anderen Comonomeren, die eine Glasübergangstemperatur, bestimmt nach K.H. Illers und H. Breuer, Kolloidzeitschrift 190 (1), 16-34 (1963), von etwa -100°C bis +25°C, vorzugsweise unter 0°C aufweisen. Außerdem können auch entsprechend hydrierte Produkte eingesetzt werden.

Bevorzugte Schlagzähmodifier sind Blockpolymere aus Vinylaromaten und Dienen. Schlagzähmodifier dieses Typs sind bekannt. In der DE-AS 1 932 234, der DE-AS 2 000 118 sowie der DE-OS 2 255 930 sind unterschiedlich aufgebaute vinylaromatische und Dienblöcke umfassende elastomere Blockcopolymerisate beschrieben. Die Verwendung entsprechender hydrierter Blockcopolymerisate gegebenenfalls im Gemisch mit der nicht hydrierten Vorstufe als Schlagzähmodifier ist beispielsweise beschrieben in der DE-OS 2 750 515, DE-OS 2 434 848, DE-OS 3 038 551, EP-A-0 080 666 und WO 83/01254. Auf die Offenbarung obiger Druckschriften wird hiermit ausdrücklich Bezug genommen.

Bevorzugte Schlagzähmodifier C sind Blockcopolymere aus Vinylaromaten und Dienen, die sich dadurch auszeichnen, daß anstelle eines reinen Dienkautschuks ein Weichblock aus Dien und Vinyl aromaten vorliegt, wobei Dien und Vinylaromaten im Weichblock statistisch verteilt sind.

Bevorzugte Vinylaromaten sind Styrol, α-Methylstyrol, Vinyltoluol oder Mischungen dieser Verbindungen. Bevorzugte Diene sind Butadien, Isopren, Piperylen, 1-Phenylbutadien oder Mischungen dieser Verbindungen. Eine besonders bevorzugte Monomerkombination ist Butadien und Styrol.

Besonders bevorzugt werden die Weichblöcke aus 31 bis 75 Gew.-% Styrol und 25 bis 69 Gew.-% Butadien aufgebaut. Ganz besonders bevorzugt werden Weichblöcke, die einen Butadienanteil von 34 bis 69 Gew.-% und einen Styrolanteil von 31 bis 66 Gew.-% enthalten.

Besonders bevorzugt werden Blockcopolymere aus Styrol und Butadien mit einer Monomerzusammensetzung aus 15 bis 66, insbesondere 25 bis 62 Gew.-% Dien und 34 bis 85, insbesondere 38 bis 75 Gew.-% Vinylaromaten.

Der Volumenanteil des Weichblocks im Festkörper des Blockcopolymeren beträgt im allgemeinen von 60 bis 95, bevorzugt von 70 bis 90, insbesondere von 80 bis 88 Vol.-%. Die Volumenanteile der aus den Vinylaromaten entstandenen Hartphase betragen entsprechend 5 bis 40, bevorzugt 10 bis 30, insbesondere 12 bis 20 Vol.-%.

Eindeutig definiert werden die Blockcopolymere durch den Quotienten aus dem Volumenanteil der Weichblöcke und den Gew.-% an Dien in den Weichblöcken. Darüberhinaus sind die Blockcopolymere in der Regel durch Glasübergangstemperaturen von -50 bis +25, insbesondere von -50 bis +5°C gekennzeichnet.

Der Aufbau der Blockcopolymeren kann dabei entlang der Kette im statistischen Mittel homogen oder inhomogen sein. Die Kettenstruktur der Blockcopolymeren kann linear oder sternförmig sein. Der Aufbau kann beispielsweise durch die folgenden allgemeinen Formeln beschrieben werden:

(V-Q/V)ₙ x⁅(Q/V-V)ₙ-Q/V]ₘ₊₁

(V-Q/V)ₙ-V y⁅(V-Q/V)ₙ]ₘ₊₁

Q/V-(V-Q/V)ₙ y⁅(Q/V-V)ₙ]ₘ₊₁

x⁅(V-Q/V)ₙ]ₘ₊₁ y⁅(V-Q/V)ₙ-V]ₘ₊₁

x⁅(Q/V-V)ₙ]ₘ₊₁ y⁅(Q/V-V)ₙ-Q/V]ₘ₊₁

x⁅(V-Q/V)ₙ-V]ₘ₊₁

Darin steht V für eine Hartphase aus Vinylaromaten, Q/Vₘ₊₁ für einen Weichblock, X für ein mindestens bifunktionellen Initiator und Y für ein Kopplungszentrum, welches mit einem mindestens bifunktionellen Kopplungsmittel gebildet wurde. Die Variablen m und n sind ganze Zahlen beginnend bei eins.

Bevorzugte Blockcopolymere haben die Struktur V-Q/V-V, X-[Q/V-V]₂ oder Y-[Q/V-V]₂, wobei der Weichblock Q/V selbst wieder in Teilblöcke unterteilt sein kann. Bevorzugt besteht der Weichblock aus 2 bis 15, insbesondere 3 bis 10 statistischen Teilblöcken.

Die Blockcopolymeren können durch lebende anionische Polymerisation in unpolaren Lösungsmitteln unter Zusatz von als Lewis-Basen wirkenden, polaren Cosolvenzien hergestellt werden. Als Lösungsmittel werden bevorzugt aliphatische Kohlenwasserstoffe wie Cyclohexan oder Methylcyclohexan eingesetzt. Als Cosolvenzien kommen Ether wie Tetrahydrofuran oder aliphatische Polyether, z.B. Diethylenglycoldimethylether oder tertiäre Amine wie Tributylamin oder Pyridin in Betracht.

Als Initiatoren für die anionische Polymerisation sind metallorganische Verbindungen, darunter Methyllithium, Ethyllithium, n-Propyllithium, n-Butyllithium, s-Butyllithium oder t-Butyllithium zu nennen.

Das Kopplungszentrum Y wird durch die Reaktion der reaktiven anionischen Kettenenden mit einem mindestens bifunktionellen Kopplungsmittel gebildet. Derartige Kopplungsmittel sind an sich bekannt. Bevorzugt werden Divinylbenzol oder epoxidierte Glycide wie epoxidiertes Leinsamenöl oder Sojaöl.

Die anionische Polymerisation wird mehrstufig durchgeführt. Ein Teil der Monomeren wird im Reaktor vorgelegt und die anionische Polymerisation durch Zugabe des Initiators gestartet. Um einen definierten aus der Monomer- und der Initiatordosierung berechenbaren Kettenaufbau zu erzielen, ist es empfehlenswert, die Reaktion bis zu hohen Umsätzen (≥99 %) laufen zu lassen, bevor die zweite Monomerzugabe erfolgt. Zwingend erforderlich ist dies jedoch nicht. Die Abfolge der Monomerzugabe richtet sich nach dem gewählten Blockaufbau. Bei monofunktioneller Initiierung wird zuerst Vinylaromat entweder vorgelegt oder direkt zudosiert. Nachfolgend sollten Dien und Vinylaromat möglichst gleichzeitig zugegeben werden. Durch die relative Dosierung an Dien zu vinylaromatischer Verbindung, die Konzentration und chemische Struktur der Lewis-Base sowie die Reaktionstemperatur wird der statistische Aufbau und die Zusammensetzung des Weichblocks Q/V bestimmt. Anschließend wird entweder die zweite Hartphase V durch Zugabe des Vinylaromaten aufpolymerisiert, oder mit einem Kopplungsmittel gekoppelt. Im Falle der bifunktionellen Initiierung wird zuerst der Weichblock Q/V aufgebaut, gefolgt von der Hartphase V.

Die Blockcopolymeren können dadurch aufgearbeitet werden, daß die Carbanionen mit einem Alkohol wie Isopropanol protoniert werden, die Reaktionsmischung angesäuert wird, z.B. mit einem Gemisch aus CO₂ und Wasser und das Lösungsmittel entfernt wird. Die Blockcopolymeren können Oxidationsinhibitoren und Antiblockmittel enthalten.

Derartige Blockcopolymerisate mit einem statistischen Aufbau der Blöcke der Weichphase sind aus der DE-A 44 20 952.0 bekannt, welche bevorzugt in den erfindungsgemäßen Formmassen eingesetzt werden.

Weiterhin bevorzugt sind nichthydrierte und/oder hydrierte A-B-A Blockkautschuke in den erfindungsgemäßen Formmassen enthalten, wobei A für einen vinylaromatischen Block und B für einen Dienblock stehen.

Insbesondere bevorzugt sind die nichthydrierten ABA-Block-Kautschuke, welche zu Formmassen mit sehr guter Tieftemperaturzähigkeit führen.

### Komponente D

Als Komponente D enthalten die erfindungsgemäßen Formmassen eine Stabilisatorkombination aus
d₁) 0,05 bis 3 Gew.-% mindestens eines sterisch gehinderten Phenols
d₂) 0,05 bis 3 Gew.-% mindestens eines Phosphonits und
d₃) 0,01 bis 4 Gew.-% Diisodecylphenylphosphit.

Als sterisch gehinderte Phenole d₁) eignen sich prinzipiell alle Verbindungen mit phenolischer Struktur, die am phenolischen Ring mindestens eine sterisch anspruchsvolle Gruppe, bevorzugt mindestens 2 sterisch gehinderte OH-Gruppen pro Molekül aufweisen.

Vorzugsweise kommen z.B. Verbindungen der Formel 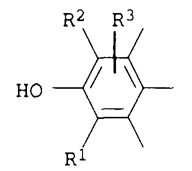 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und
R³ eine Alkylgruppe, eine substituierte Alkylgruppe, eine Alkoxigruppe oder eine substituierte Aminogruppe. Antioxidantien der genannten Art werden beispielsweise in der DE-A-27 02 661 (US-A-4 360 617) beschrieben.

Eine weitere Gruppe bevorzugter sterisch gehinderter Phenole leiten sich von substituierten Benzolcarbonsäuren ab, insbesondere substituierter Benzolpropionsäure.

Besonders bevorzugte Verbindungen aus dieser Klasse sind Verbindungen der Formel 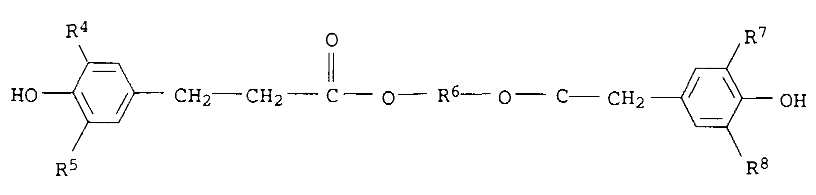 wobei R⁴, R⁵, R⁷ und R⁸ unabhängig voneinander C₁-C₈-Alkylgruppen, die ihrerseits substituiert sein können (mindestens eine davon ist eine sterisch anspruchsvolle Gruppe) und R⁶ einen zweiwertigen aliphatischen Rest mit 1 bis 10 C-Atomen, der in der Hauptkette auch C-O-Bindungen aufweisen kann.

Bevorzugte Verbindungen, die dieser Formel entsprechen, sind 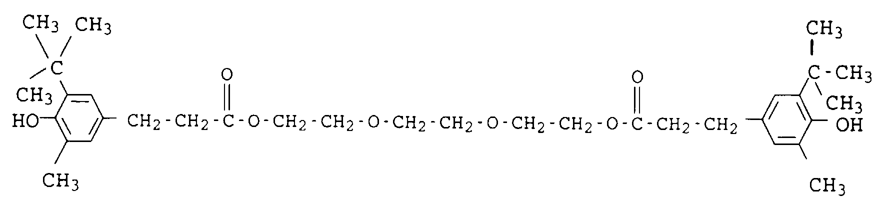 (Irganox® 245 der Firma Ciba-Geigy) 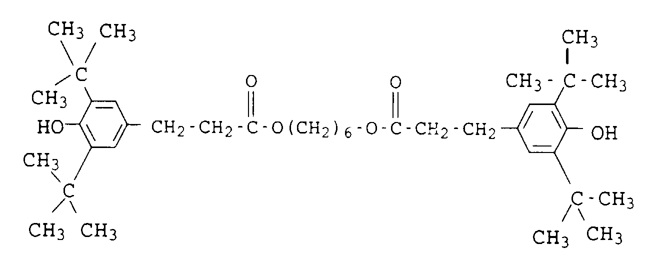 (Irganox® 259 der Firma Ciba-Geigy) 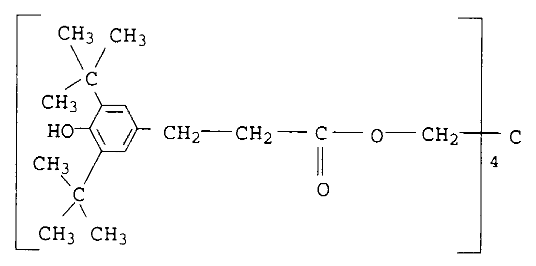 (Irganox® 1010 der Firma Ciba-Geigy)

Beispielhaft genannt seien insgesamt als sterisch gehinderte Phenole:
2,2'-Methylen-bis(4-methyl-6-tert.-butylphenol), 1,6-Hexandiol-bis[3-(3,5-di-tert.-butyl-4-hydroxyphenyl)-propionat], Pentaerythrit-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3',5'-di-tert.-butylphenyl)-5-chlorbenzotriazol, 2,6-Di-tert.-butyl-4-hydroxymethylphenol, 1,3,5-Trimethyl-3,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxy-benzyl-dimethylamin und N,N'-Hexamethylen-bis-3,5-di-tert.-butyl-4-hydroxyhydrocinnamid.

Besonders bevorzugt werden 3,5-bis(t-Butyl)-4-hydroxybenzylphosphonsäurediethylester sowie Octadecyl-3-(3,5-bis(t-butyl)-4-hydroxyphenyl)-propionat eingesetzt, welche unter dem Warenzeichen Irganox® 1222 und Irganox® 1076 der Firma Ciba Geigy im Handel erhältlich sind.

Die Antioxidantien (d₁), die einzeln oder als Gemische eingesetzt werden können, werden in einer Menge von 0,05 bis 3 Gew.-%, vorzugsweise von 0,1 bis 1,0 Gew.-% und insbesondere 0,2 bis 0,6 Gew.-% eingesetzt, bezogen auf die Komponenten A) bis F).

Geeignete Phosphonite d₂) sind solche der allgemeinen Formel I 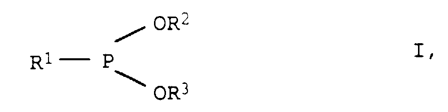 wobei R¹ für einen C₄- bis C₂₀-Alkyl-, C₅- bis C₈-Cycloalkyl-, gegebenenfalls substituierten C₆- bis C₂₀-Aryl- oder O, S oder N-enthaltende 5 bis 6-gliedrige heterocyclische Reste oder für eine Gruppe der Formel II 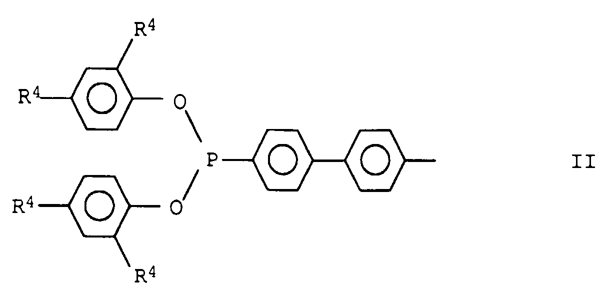 steht, in welcher
- R⁴: für gleiche oder verschiedene Alkylgruppen mit 1 bis 18, vorzugsweise 1 bis 4 C-Atomen steht und
- R², R³: unabhängig voneinander Wasserstoff, einen C₄- bis C₂₀-Alkyl-, C₅- bis C₈-Cycloalkyl-, gegebenenfalls substituierten C₆- bis C₂₀-Aryl- oder O, S oder N-enthaltende 5 bis 6-gliedrige heterocyclische Reste, ein Alkali- oder Erdalkalimetall bedeuten.

Bevorzugt sind die C₆- bis C₂₀-Arylreste, welche durch OH und/oder C₁- bis C₉-Alkylreste substituiert sein können.

Bevorzugt sind auch Verbindungen der Formel (I), in denen die Reste R¹, R² und R³ C₄- bis C₁₂-Alkyl-, C₅- bis C₆-Cycloalkyl- und/oder C₆-Cycloalkyl- und/oder C₆- bis C₂₀-Arylgruppen sind.

Die erfindungsgemäß einzusetzenden stabilisierenden Verbindungen der allgemeinen Formel (I) sind im Handel unter den Handelsnamen "Irgafos P-EPQ" der Fa. Ciba Geigy erhältlich und können nach den dem Fachmann bekannten Verfahren, wie sie z.B. in Houben-Weyl, Bd. 12/1, Thieme-Verlag, Stuttgart 1963, S. 324 ff beschrieben sind, hergestellt werden. So können die Verbindungen der allgemeinen Formel (I), z.B. durch die Umsetzung von Dihalogenphosphinen mit Hydroxyverbindungen, wie Alkoholen oder Phenolen, in Gegenwart von säurebindenden Mitteln, wie z.B. tertiären Aminen, oder durch Grignard-Reaktion bzw. durch Umsetzung von Alkali- oder Erdalkali-organylen mit Phosphorigsäuretriestern oder Phosphorigsäurediester-halogeniden hergestellt werden. Vertreter dieser Verbindungen sind bereits als Stabilisatoren für Polypropylen [vgl. Journal of Applied Polymer Science" 27 (1982), Seiten 951 ff] und andere Polymerisate [vgl. EP-B-5447] bekannt.

Beispiele für die erfindungsgemäß einzusetzenden Phosphonite sind Monophosphonite mit R¹, R², R³ = C₁- bis C₂₀-Alkylgruppen, wie Nonyl-, Dodecyl-, Octadecyl- oder Arylgruppen, wie Phenyl, Nonylphenyl, 2,4-Di-methylphenyl, 2,4-Di-tert.-butylphenyl, 3,5-Dimethyl-4-hydroxyphenyl, 3,5-Di-tert.butyl-4-hydroxyphenyl sowie Cycloalkyl-Gruppen, wie Cyclohexyl oder 3,3,5,5-Tetramethylcyclohexyl oder heterocyclische Gruppen, die sich z.B. vom Imidazol ableiten. Besonders bevorzugt sind jedoch Diphosphonite bei denen R¹ eine C₂- bis C₂₀-Alkylen-, Cycloalkylen- oder Arylylengruppe von Hexylylen-, Nonylylen- oder Cyclohexylylen, Phenylylen oder 4,4'-Bisphenylylen oder eine Gruppe der Formel II darstellt, in welcher R⁴ für gleiche Alkylgruppen, bevorzugt für den t-Butylrest steht.

Besonders bevorzugt werden folgende Phosphonite eingesetzt: Bis-(2,4-di-tert.butylphenyl)-phenylphosphonit, Tris-(2,4-di-tert.butylphenyl)-phosphonit, Tetrakis-(2,4-di-tert.butyl-6-methylphenyl)-4,4'-biphenylylen-di-phosphonit, Tetrakis-(2,4-di-tert.butylphenyl)-4,4'-biphenylylen-diphosphonit, Tetrakis-(2,4-di-methylphenyl)-1,4-phenylylen-diphosphonit, Tetrakis-(2,4-di-tert.butylphenyl)-1,6-hexylylen-diphosphonit und/oder Tetrakis-(3,5-di-methyl-4-hydroxy-phenyl)-4,4'-biphenylylen-diphosphonit, Tetrakis-(3,5-di-tert.-butyl-4-hydroxy-phenyl)-4,4'-biphenylylen-diphosphonit.

Ganz besonders geeignet sind die Diphosphonite Tetrakis-(2,4-di-tert.-butylphenyl)-4,4'-biphenylen-diphosphonit, Tetrakis-(2,4-di-tert.butylphenyl)-1,6-hexylylen-diphosphonit, Tetrakis-(3,5-dimethyl-4-hydroxyphenyl)-4,4'-biphenylylen-diphosphonit und Tetrakis-(3,5-di-tert.-butyl-4-hydroxyphenyl)-4,4'-biphenylylen-diphosphonit sowie Tetrakis-(2,4-di-tert.butyl)-1,4-phenylylen-diphosphonit, wobei wiederum insbesondere den Diphosphoniten Tetrakis-(3,5-dimethyl-4-hydroxyphenyl)-4,4'-biphenylylendiphosphonit und Tetrakis-(3,5-di-tert.butyl-4-hydroxylphenyl)-4,4-biphenylylen-diphosphonit der Vorzug zu geben ist.

Insbesondere bevorzugte Reste R², R³ sind identische oder verschiedene 2,4-Dialkylphenylgruppen, wobei die 2,4-Di-t-butylphenylgruppe ganz besonders bevorzugt ist. Als bevorzugte Verbindung sei Tetrakis-(2,4-di(t-butyl)phenyl) 4,4'-biphenylylenphosphonit genannt.

Als Alkali- bzw. Erdalkalimetalle für R², R³ seien beispielsweise Natrium, Kalium und Lithium genannt. Derartige Metall- oder Metalloidsalze der Phosphonsäure sind u.a. aus der EP-A-324 716, GB-A 22 11 850, EP-A 245 207 und EP-A 321 002 bekannt.

Die Phosphonite d₂), die einzeln oder als Gemische eingesetzt werden können, werden in einer Menge von 0,05 bis 3, vorzugsweise von 0,1 bis 2,0 Gew.-% und insbesondere von 0,2 bis 1 Gew.-% eingesetzt (bezogen auf die Komponenten A) bis F).

Als Komponente d₃) enthalten die erfindungsgemäßen Formmassen Di-isodecylphenylphosphit.

Die Komponente d3) ist, bezogen auf die Komponenten A) -F), in Mengen von 0,01 bis 4, vorzugsweise 0,1 bis 3, insbesondere 0,2 bis 2,5 und ganz besonders von 0,2 bis 2 Gew.-% in den erfindungsgemäßen Formmassen enthalten.

Die als Komponente E) gegebenenfalls in den Massen enthaltenen Polyamide sind an sich bekannt und umfassen die teilkristallinen und amorphen Harze mit Molekulargewichten (Gewichtsmittelwerten) von mindestens 5000, die gewöhnlich als Nylon bezeichnet werden. Solche Polyamide sind z.B. in den amerikanischen Patentschriften 2 071 250, 2 071 251, 2 130 523, 2 130 948, 2 241 322, 2 312 966, 2 512 606 und 3 393 210 beschrieben.

Die Polyamide können z.B. durch Kondensation äquimolarer Mengen einer gesättigten oder einer aromatischen Dicarbonsäure mit 4 bis 12 Kohlenstoffatomen, mit einem gesättigten oder aromatischen Diamin, welches bis 14 Kohlenstoffatome aufweist oder durch Kondensation von ω-Aminocarbonsäuren oder Polyaddition von Lactamen hergestellt werden.

Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide wie Polycaprolactam, Polylaurinsäurelactam, ferner das Amid der Poly-11-aminoundecansäure und ein Polyamid aus Di(p-aminocyclohexyl)-methan und Dodecandisäure.

Es ist auch möglich, gemäß der Erfindung Polyamide zu verwenden, die durch Copolykondensation von zwei oder mehr der obengenannten Monomeren oder ihrer Komponenten hergestellt worden sind, z.B. Copolymere aus Adipinsäure, Isophthalsäure oder Terephthalsäure und Hexamethylendiamin oder Copolymere aus Caprolactam, Terephthalsäure und Hexamethylendiamin. Bevorzugte derartige teilaromatische Copolyamide enthalten als Komponente e₁) Einheiten, die sich von Terephthalsäure und Hexamethylendiamin ableiten. Ein geringer Anteil der Terephthalsäure, vorzugsweise nicht mehr als 30 Gew.-% der gesamten eingesetzten aromatischen Dicarbonsäure kann durch Isophthalsäure oder andere aromatische Dicarbonsäuren, vorzugsweise solche, in denen die Carboxylgruppen in parastellung stehen, ersetzt werden.

Besonders bevorzugt werden teilaromatische Copolyamide, die neben Einheiten e₁), die sich von Terephthalsäure und Hexamethylendiamin ableiten, Einheiten, die sich von ε-Caprolactam ableiten (e₂), und/oder Einheiten, die sich von Adipinsäure und Hexamethylendiamin (e₃) ableiten, enthalten.

Der Anteil an Einheiten die sich von ε-Caprolactam ableiten, beträgt in solchen Polyamiden üblicherweise bis zu 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, üblicherweise bis zu 60 Gew.-%, vorzugsweise 30 bis 60 Gew.-% und insbesondere 35 bis 55 Gew.-% beträgt.

Derartige Copolyamide können auch sowohl Einheiten von ε-Caprolactam als auch Einheiten von Adipinsäure und Hexamethylendiamin enthalten. In diesem Fall ist es vorteilhaft, wenn der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten e₁)) und 20 bis 50, vorzugsweise 25 bis 40 Gew.-% Einheiten, die sich von ε-Caprolactam ableiten (Einheiten e₂)), erwiesen.

Die Herstellung derartiger teilaromatischer Copolyamide kann z.B. nach dem in den EP-A-129 195 und EP 129 196 beschriebenen Verfahren erfolgen.

Bevorzugt werden lineare Polyamide mit einem Schmelzpunkt von über 200°C.

Die Schmelzpunkte der teilaromatischen Copolyamide liegen im Bereich von 270 bis 325°C, bevorzugt 280 bis 310°C, wobei dieser hohe Schmelzpunkt auch mit einer hohen Glasübergangstemperatur von in der Regel mehr als 75°C, insbesondere mehr als 85°C (im trockenen Zustand) verbunden ist.

Bevorzugte Polyamide sind Polyhexamethylenadipinsäureamid, Polyhexamethylensebacinsäureamid und Polycaprolactam sowie Polyamid 6/6T (Copolyamid aus Caprolactam, Hexamethylendiamin/Terephthalsäure) und Polyamid 66/6T (Copolyamid aus Hexamethylendiamin/Adipinsäure/Terephthalsäure).

Außerdem seien noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Die Polyamide E) weisen im allgemeinen eine relative Viskosität von 2 bis 5 dl/g auf, bestimmt an einer 1 gew.-%igen Lösung in 96 %iger Schwefelsäure bei 23°C, was einem Molekulargewicht von etwa 15 000 bis 45 000 entspricht. Polyamide mit einer relativen Viskosität von 2,4 bis 3,5, insbesondere 2,5 bis 3,4 werden bevorzugt verwendet.

Der Anteil der Polyamide E) an den erfindungsgemäßen Formmassen beträgt 0 bis 70, vorzugsweise bis zu 65 und insbesondere bis zu 60 Gew.-%, bezogen auf A) bis F).

### Komponente F

Als Komponente F können die erfindungsgemäßen Formmassen weitere Zusatzstoffe oder Verarbeitungshilfsmittel oder deren Mischungen enthalten. Der Anteil der Komponente F beträgt im allgemeinen von 0 bis 60 Gew.-%, bezogen auf die gesamte Zusammensetzung. Bevorzugt beträgt er nicht mehr als 50 Gew.-% und insbesondere nicht mehr als 30 Gew.-%, bezogen auf die gesamte Zusammensetzung.

Als Komponente F können die Zusammensetzungen Flammschutzmittel in Mengen von 0 bis 20, bevorzugt von bis zu 18, insbesondere bis zu 15 Gew.-%, bezogen auf die gesamte Zusammensetzung A) bis F) enthalten.

Als Flammschutzmittel können phosphororganische Verbindungen, wie Phosphate oder Phosphinoxide eingesetzt werden.

Beispiele für Phosphinoxide sind Triphenylphosphinoxid, Tritolylphosphinoxid, Trisnonylphenylphosphinoxid, Tricyclohexylphosphinoxid, Tris-(n-butyl)-phosphinoxid, Tris-(n-hexyl)-phosphinoxid, Tris-(n-octyl)-phosphinoxid, Tris-(cyanoethyl)-phosphinoxid, Benzylbis(cyclohexyl)-phosphinoxid, Benzylbisphenylphosphinoxid, Phenylbis-(n-hexyl)-phosphinoxid. Besonders bevorzugt eingesetzt werden Triphenylphosphinoxid, Tricyclohexylphosphinoxid, Tris-(n-octyl)-phosphinoxid oder Tris-(cyanoethyl)-phosphinoxid.

Als Phosphate kommen vor allem alkyl- und arylsubstituierte Phosphate in Betracht. Beispiele sind Phenylbisdodecylphosphat, Phenylbisneopentylphosphat, Phenylethylhydrogenphosphat, Phenyl-bis-(3,5,5-trimethylhexyl)phosphat, Ethyldiphenylphosphat, Bis-(2-ethylhexyl)-p-tolyl-phosphat, Tritolylphosphat, Trixylylphosphat, Trimesitylphosphat, Bis-(2-ethylhexyl)-phenylsphosphat, Tris-(nonylphenyl)-phosphat, Bis-(dodecyl)-p-(tolyl)-phosphat, Tricresylphosphat, Triphenylphosphat, Di-butylphenylphosphat, p-Tolyl-bis-(2,5,5-trimethylhexyl)-phosphat, 2-Ethylhexyldiphenylphosphat. Besonders geeignet sind Phosphorverbindungen, bei denen jedes R ein Aryl-Rest ist. Ganz besonders geeignet ist dabei Triphenylphosphat, Trixylylphosphat sowie Trimesitylphosphat. Des weiteren können auch cyclische Phosphate eingesetzt werden. Besonders geeignet ist hierbei Diphenylpentaerythritol-diphosphat.

Darüber hinaus können Mischungen unterschiedlicher Phosphorverbindungen verwendet werden. Bevorzugt werden beispielsweise Mischungen, die aufgebaut sind aus
α) mindestens einem Phosphinoxid der allgemeinen Formel IV 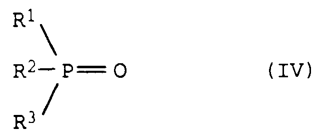 wobei R¹, R² und R³ gleiche oder verschiedene Alkyl-, Aryl-, Alkylaryl- oder Cycloalkylgruppen mit 8 bis 40 C-Atomen bedeuten und
β) mindestens einem Phosphat der allgemeinen Formel V 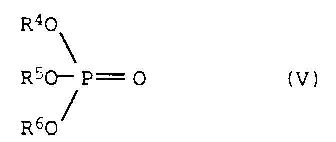 in der die Substituenten R⁴, R⁵ und R⁶ gleiche oder verschiedene Alkyl-, Aryl-, Alkylaryl- oder Cycloalkylgruppen mit 8 bis 40 C-Atomen bedeuten,
   sowie
γ) einer Borverbindung.

Besonders bevorzugt sind Mischungen aus folgenden Phosphinoxid α)- und Phosphat β)-Kombinationen: Triphenylphosphinoxid-Triphenylphosphat oder Trixylylphosphat, Tricyclohexylphosphinoxid und Triphenylphosphat, Tris(cyanoethyl)phosphinoxid und Triphenylphosphat, Tris-(n-octyl)-phospinoxid und Triphenylphosphat. Es können auch Mischungen aus mehreren Phosphinoxiden und Phosphaten eingesetzt werden, wie etwa die Mischung Triphenylphosphinoxid, Triphenylphosphat, Trixylylphosphat.

Unter Borverbindungen γ) sollen sowohl anorganische als auch organische Borverbindungen verstanden werden.

Beispiele für anorganische Borverbindungen sind Borsäure, B₂O₃ und Salze der Borsäure, bevorzugt mit Alkali- oder Erdalkalimetallen. Besonders bevorzugt sind Borsäure, Natriumborat oder Boroxid.

Organische Borverbindungen γ) sind beispielsweise Tetraphenylborate, z.B. Natriumtetraphenylborat und Tribenzylborat.

Die Zusammensetzung der Mischung beträgt im allgemeinen (bezogen auf den Gehalt der gesamten Mischung)
α) 1 bis 98,9, bevorzugt 10 bis 85 und insbesondere 20 bis 70 Gew.-%,
β) 1 bis 98,9, bevorzugt 10 bis 85 und insbesondere 20 bis 70 Gew.-%,
γ) 0,1 bis 70, bevorzugt 5 bis 50 und insbesondere 10 bis 30 Gew.-%.

Darüberhinaus sind phosphororganische Verbindungen der allgemeinen Formeln VI bis VIII als Flammschutzmittel geeignet: 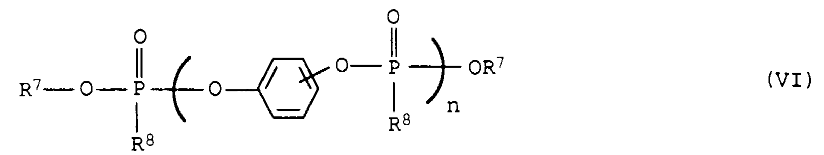 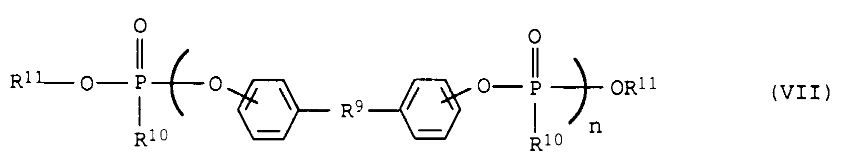 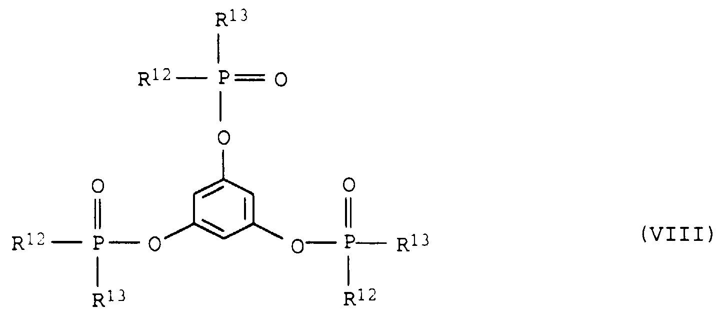 wobei R⁷ und R¹¹ Alkyl- oder Aryl-, R⁸, R¹⁰, R¹² und R¹³ Alkyl-, Aryl-, Alkoxy oder Aryloxy, n und p eine ganze Zahl von 1 bis 30 bedeuten, R⁹ Alkyl, -SO₂-, -CO-, -N=N-, R¹⁴-P=O bedeutet, wobei R¹⁴ Alkyl-, Aryl- oder Alkylaryl- ist.

Meist werden Mischungen verschiedener Oligomerer oder Isomerer dieser phosphororganischen Verbindungen eingesetzt.

Das Molekulargewicht beträgt im allgemeinen nicht mehr als 1 000, bevorzugt 150 bis 800.

Es versteht sich, daß auch Mischungen der genannten Flammschutzmittel eingesetzt werden können.

Als Antitropfmittel seien Zusätze wie Teflon oder die in der DE-A 195 24 585 beschriebenen Polymerisate genannt, welche in Mengen bis zu 1, vorzugsweise bis zu 0,7 Gew.-% vorliegen können.

Als weitere Zusatzstoffe seien genannt Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel wie Glasfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum und Kreide.

Des weiteren kommen Gleitmittel wie Polyethylenwachs als Zusatzstoffe in Betracht.

Ruße oder Titandioxid können beispielsweise als Pigmente verwendet werden.

Bei Verwendung von TiO₂ liegt die mittlere Teilchengröße in der Regel im Bereich von 50 bis 400 nm, insbesondere von 150 bis 240 nm. Technische Verwendung finden Rutile und Anatas, die gegebenenfalls mit Metalloxiden, z.B. Aluminiumoxiden, Siliciumoxiden, Oxiden des Zn oder Siloxanen beschichtet sind.

Als Ruße sollen mikrokristalline, feinteilige Kohlenstoffe verstanden werden (vgl. Kunststofflexikon, 7. Auflage 1980).

Als geeignet seien die Ofenruße, Acetylenruße, Gasruße sowie die durch thermische Herstellung erhältlichen Thermalruße genannt.

Die Teilchengrößen liegen vorzugsweise im Bereich von 0,01 bis 0,1 µm und die Oberflächen im Bereich von 10² bis 10⁴ m²/g (BET/ ASTM D 3037) bei DBP-Absorptionen von 10² bis 10³ ml/100 g (ASTM D 2414).

Als weitere Zusatzstoffe seien Schlagzähmodifier genannt, welche für Polyamide geeignet sind.

Die Herstellung der erfindungsgemäßen thermoplastischen Formmassen erfolgt zweckmäßigerweise durch Mischen der Komponenten bei Temperaturen im Bereich von 250 bis 320°C in üblichen Mischvorrichtungen, wie Knetern, Banburymischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei oder gegebenenfalls drei Komponenten vorgemischt sein oder es können auch alle Komponenten gemeinsam gemischt werden.

Die erfindungsgemäßen Formmassen zeichnen sich durch eine sehr gute Thermooxidationsstabilität in Kombination mit einer guten Fließfähigkeit und Zähigkeit, insbesondere einer guten Tieftemperaturzähigkeit aus. Daher eignen sie sich zur Herstellung von Formkörpern jeglicher Art, welche bevorzugt im Elektro- und Elektronikbereich z.B. als Gehäuseteile verwendet werden.

### Beispiele

### Komponente A

Poly-2,6-dimethyl-l,4-phenylenether mit einem mittleren Molekulargewicht (M_{w}) von 40 000 g/mol.

### Komponente B

- b₁:: Schlagfestes Polystyrol (M_{w}/Mₙ = 2,4) mit 9 Gew.-% Polybutadien und Zellteilchenmorphologie, mittlere Teilchengröße der Weichkomponente von 1 µm. Die Viskositätszahl (VZ) der Hartmatrix betrug 80 ml/g (0,5 %ig in Toluol bei 23°C)
- b₂:: Schlagfestes Polystyrol (M_{w}/Mₙ = 2,3) mit 11 Gew.-% Polybutadien und Zellteilchenmorphologie, mittlere Teilchengröße der Weichkomponente von 5 µm. Die Viskositätszahl (VZ) der Hartmatrix betrug 80 ml/g (0,5 %ig in Toluol bei 23°C)

### Komponente C

- c₁:: Hydriertes Styrol-Butadien-Styrol-Dreiblockcopolymer (z.B. SEPS-Blockkautschuk, Kraton® G 1650 der Firma Shell AG)
- c₂:: nicht hydriertes Styrol-Butadien-Styrol Dreiblockcopolymer (S-B-S-Blockkautschuk, Cariflex® TR 1101 S der Firma Shell AG)

### Komponente D

- d₁:: Octadecyl-3-(3,5-bis (t-butyl)-4-hydroxyphenyl)-propionat (Irganox®1076 der Firma Ciba Geigy AG)
- d₂:: Tetrakis-(2,4-di(t.-butylphenyl)-4,4'-biphenylylendiphosphonit (Irgafos® P-EPQ der Firma Ciba Geigy AG)

### Komponente d₃

1. Di-isodecyl-phenyl-phosphit (Bärostab® CWM 203 der Firma Bärlocher)
2. Bis-(2,4-di-t-butylphenyl)pentaerythritdiphosphit (Ultranox® 626 der Firma General Electric (zum Vergleich))
3. Diphenylisodecylphosphit (zum Vergleich)
4. Triisodecylphosphit (zum Vergleich)

### Komponente F

- f₁:: Resorcinoldiphosphat (Fyroflex® RDP der Firma Akzo)
- f₂:: Teflon-Dispersion 60 N der Firma DuPont: Feststoffgehalt: 60 Gew.-%

- f₃:: Zinksulfid
- f₄: Zinkoxid

### Herstellung der thermoplastischen Formmassen

Die Komponenten A) bis F) wurden auf einem Zweiwellenextruder (ZSK 30 der Fa. Werner & Pfleiderer) bei 270°C gemischt, als Strang ausgetragen, gekühlt und granuliert.

Das getrocknete Granulat wurde bei 250 bis 280°C zu Rundscheiben und Flachstäben der Dicke 1/16" für die UL 94-Prüfung verarbeitet.

Die Schädigungsarbeit Wₛ wurde nach DIN 53 443 bei 23°C bestimmt. Zur Beurteilung der Wärmealterungsbeständigkeit wurden Rundscheiben der Proben 14 Tage bei 110 bzw. 90°C (flammwidrige Produkte) gelagert und anschließend die Schädigungsarbeit bestimmt.

Die Flammwidrigkeit wurde nach UL 94 an Stäben von 1/16"-Dicke bestimmt, die angeführten Brandzeiten stellen die Summe der Brandzeiten aus beiden Beflammungen dar.

Die Fließfähigkeit der Formmassen wurde nach DIN 53 735 bei einer Massetemperatur von 275°C und einer Belastung von 21,6 kg ermittelt, die Tieftemperaturzähigkeit aₖ gemäß ISO 179 1eA.

Die Zusammensetzungen der Formmassen und die Eigenschaften sind den Tabellen zu entnehmen.

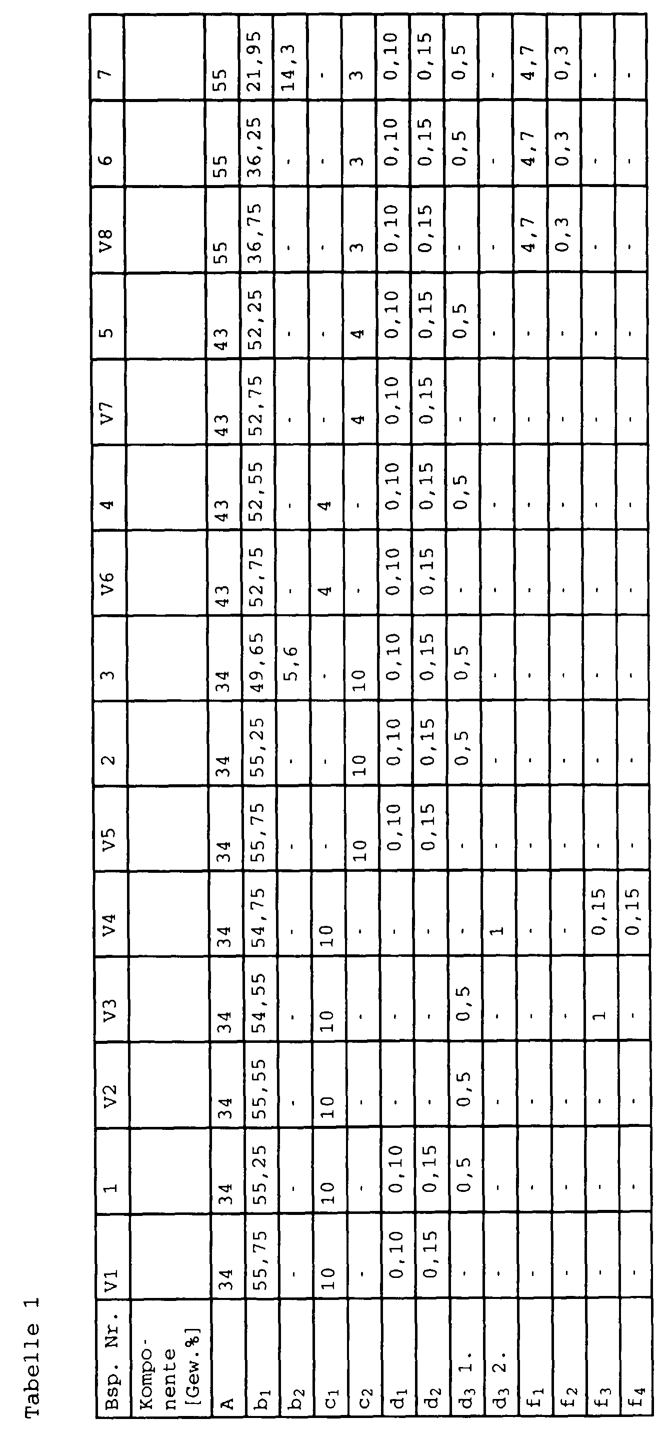

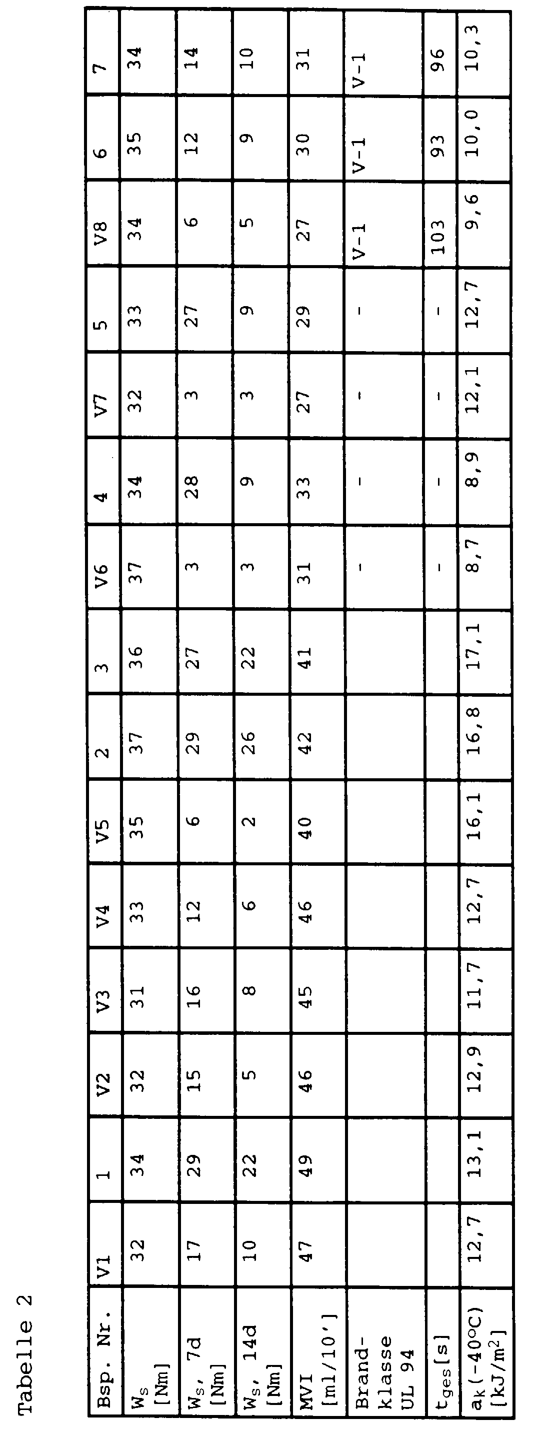

**Tabelle 3**

| Beispiel | V9 | V10 | V11 | 8 | 2 (Wdh.) |
|---|---|---|---|---|---|
| A | 34 | 34 | 34 | 34 | 34 |
| b₁ | 55,25 | 55,25 | 55,25 | 55,25 | 55,25 |
| b₂ | - | - | - | - | - |
| c₂ | 10 | 10 | 10 | 10 | 10 |
| d₁ | 0,1 | 0,25 | - | 0,1 | 0,1 |
| d₂ | 0,15 | - | 0,25 | 0,15 | 0,15 |
| d₃ 1. | - | 0,5 | 0,5 | - | 0,5 |
| d₃ 3. | - | - | - | 0,5 | - |
| d₃ 4. | 0,5 | - | - | - | - |
| Wₛ [Nm] | 31 | 32 | 34 | 33 | 37 |
| Wₛ, 7d [Nm] | 22 | 21 | 22 | 25 | 29 |
| Wₛ, 14d [Nm] | 17 | 16 | 17 | 20 | 26 |
| MVI [ml/10'] | 41 | 42 | 38 | 39 | 42 |
| ak (-40°C) [kJ/m²] | 16,2 | 9,2 | 16,3 | 16,4 | 16,8 |

## Patentansprüche

1. Thermoplastische Formmassen, enthaltend
A) 5 bis 97,9 Gew.-% eines Polyphenylenethers,
B) 1 bis 93,9 Gew.-% an schlagfestmodifizierten Polystyrolen oder Copolymeren aus Styrol und anderen vinylaromatischen Verbindungen,
C) 1 bis 50 Gew.-% an natürlichen oder synthetischen Kautschuken mit Glasübergangstemperaturwerten von -100 bis +25°C,
D) eine Stabilisatormischung aus
d₁) 0,05 bis 3 Gew.-% mindestens eines sterisch gehinderten Phenols,
d₂) 0,05 bis 3 Gew.-% mindestens eines Phosphonits und
d₃) 0,01 bis 4 Gew.-% an Diisodecylphenylphosphit,
E) 0 bis 70 Gew.-% eines Polyamids sowie
F) 0 bis 60 Gew.-% weiterer Zusatzstoffe und Verarbeitungshilfsmittel,
wobei die Summe der Gewichtsprozente der Komponenten A) bis F) 100 % ergibt.

2. Thermoplastische Formmassen nach Anspruch 1, enthaltend als Komponente d₂ mindestens ein Phosphonit der allgemeinen Formel I 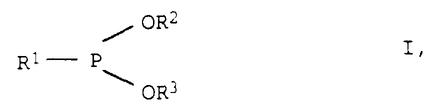 wobei
R¹ für einen C₄- bis C₂₀-Alkyl-, C₅- bis C₈-Cycloalkyl-, gegebenenfalls substituierten C₆- bis C₂₀-Aryl- oder O, S oder N-enthaltende 5 bis 6-gliedrige heterocyclische Reste oder für eine Gruppe der Formel II 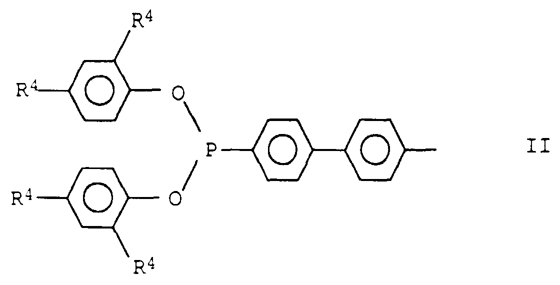 steht, in welcher
R⁴ für gleiche oder verschiedene Alkylgruppen steht und
R², R³ unabhängig voneinander Wasserstoff, einen C₄- bis C₂₀-Alkyl-, C₅- bis C₈-Cycloalkyl-, gegebenenfalls substituierten C₆- bis C₂₀ Aryl- oder O, S oder N enthaltende 5 bis 6-gliedrige heterocyclische Reste, ein Alkali- oder Erdalkalimetall bedeuten.

3. Thermoplastische Formmassen nach Anspruch 2, enthaltend als Phosphonit d₂) Reste R¹ gemäß Formel II sowie als R² und R³ identische oder verschiedene 2,4-Dialkylphenylgruppen.

4. Thermoplastische Formmassen nach den Ansprüchen 1 bis 3, enthaltend als Phosphonit d₂) Tetra-kis(2,4-di(-t-butyl)-phenyl)-4,4'-diphenylendiphosphonit.

5. Thermoplastische Formmassen nach den Ansprüchen 1 bis 4, enthaltend als sterisch gehindertes Phenol d₁) Octadecyl-3-(3,5-bis(t-butyl)-4-hydroxyphenyl)-propionat.

6. Thermoplastische Formmassen nach den Ansprüchen 1 bis 5, enthaltend als Komponente C) einen nicht-hydrierten ABA-Blockkautschuk, wobei A für einen vinylaromatischen Block und B für einen Dienblock stehen.

7. Verwendung der thermoplastischen Formmassen nach den Ansprüchen 1 bis 6 zur Herstellung von Fasern, Folien und Formkörpern.

8. Formkörper, Fasern und Folien erhältlich aus den thermoplastischen Formmassen gemäß den Ansprüchen 1 bis 6.

## Claims

1. A thermoplastic molding material containing
A) from 5 to 97.9 % by weight of a polyphenylene ether,
B) from 1 to 93.9 % by weight of impact-modified polystyrenes or copolymers of styrene and other vinylaromatic compounds,
C) from 1 to 50 % by weight of natural or synthetic rubbers having glass transition temperatures of from -100 to +25°C,
D) a stabilizer mixture comprising
d₁) from 0.05 to 3 % by weight of at least one sterically hindered phenol,
d₂) from 0.05 to 3 % by weight of at least one phosphonite and
d₃) from 0.01 to 4 % by weight of diisodecyl phenyl phosphite,
E) from 0 to 70 % by weight of a polyamide and
F) from 0 to 60 % by weight of further additives and processing assistants,
the sum of the percentages by weight of components A) to F) being 100 %.

2. A thermoplastic molding material as claimed in claim 1, containing, as component d₂, at least one phosphonite of the formula I 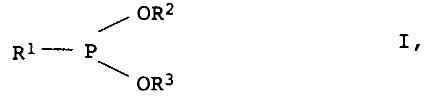 where
R¹ is C₄-C₂₀-alkyl, C₅-C₈-cycloalkyl, unsubstituted or substituted C₆-C₂₀-aryl or an O-, S- or N-containing 5- or 6-membered heterocyclic radical or a group of the formula II 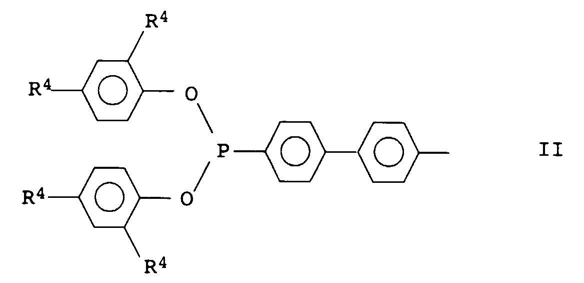 where
R⁴ are identical or different alkyl groups, and
R² and R³ independently of one another, are each hydrogen, C₄-C₂₀-alkyl, C₅-C₈-cycloalkyl, unsubstituted or substituted C₆-C₂₀-aryl, an O-, S- or N-containing 5- or 6-membered heterocyclic radical or an alkali metal or alkaline earth metal.

3. A thermoplastic molding material as claimed in claim 2, containing radicals R¹ according to formula II as phosphonite d₂) and identical or different 2,4-dialkylphenyl groups as R² and R³.

4. A thermoplastic molding material as claimed in any of claims 1 to 3, containing tetrakis(2,4-di(-t-butyl)phenyl) 4,4'-biphenylene diphosphonite as phosphonite d₂).

5. A thermoplastic molding material as claimed in any of claims 1 to 4, containing octadecyl-3-(3,5-bis(t-butyl)-4-hydroxyphenyl)propionate as the sterically hindered phenol d₁).

6. A thermoplastic molding material as claimed in any of claims 1 to 5, containing, as component C), an unhydrogenated ABA block rubber, where A is a vinylaromatic block and B is a diene block.

7. The use of a thermoplastic molding material as claimed in any of claims 1 to 6 for the production of fibers, films and moldings.

8. A molding, fiber or film obtainable from the thermoplastic molding material as claimed in any of claims 1 to 6.

## Revendications

1. Masses de moulage thermoplastiques, contenant
A) 5 à 97,9% en poids d'un éther de polyphénylène,
B) 1 à 93,9% en poids de polystyrènes modifiés pour résister aux chocs ou de copolymères de styrène et d'autres composés vinylaromatiques,
C) 1 à 50% en poids de caoutchoucs naturels ou synthétiques ayant des températures de transition vitreuse de -100 à +25°C,
D) un mélange de stabilisants à base
d₁) de 0,05 à 3% en poids d'au moins un phénol à empêchement stérique,
d₂) de 0,05 à 3% en poids d'au moins un phosphonite, et
d₃) de 0,01 à 4% en poids de phosphite de diisodécylphényle,
E) 0 à 70% en poids d'un polyamide, ainsi que
F) 0 à 60% en poids d'autres additifs et agents auxiliaires de traitement,
la somme des pour-cent en poids des composants A) à F) donnant 100%.

2. Masses de moulage thermoplastiques suivant la revendication 1, contenant, comme composant d₂, au moins un phosphonite de la formule générale I : 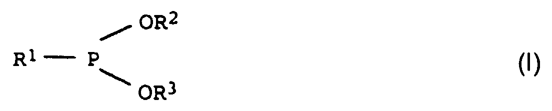 dans laquelle
R¹ représente un groupe alkyle en C₄-C₂₀, cycloalkyle en C₅-C₈, ou aryle en C₆-C₂₀ éventuellement substitué, ou des radicaux hétérocycliques pentagonaux à hexagonaux contenant O, S ou N, ou un groupe de la formule II : 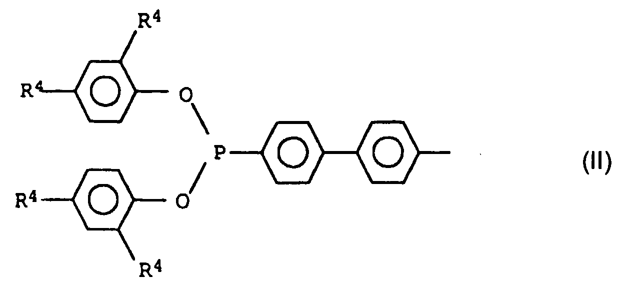 dans laquelle
R⁴ représente des groupes alkyle identiques ou différents, et
R² et R³ représentent indépendamment de l'hydrogène, un groupe alkyle en C₄-C₂₀, cycloalkyle en C₅-C₈ ou aryle en C₆-C₂₀ éventuellement substitué ou des radicaux hétérocycliques pentagonaux à hexagonaux contenant O, S ou N, ou un métal alcalin ou alcalino-terreux.

3. Masses de moulage thermoplastiques suivant la revendication 2, contenant, comme phosphonite d₂), des radicaux R¹ conformes à la formule II ainsi que, comme R² et R³, des groupes 2,4-dialkylphényle identiques ou différents.

4. Masses de moulage thermoplastiques suivant l'une des revendications 1 à 3, contenant, comme phosphonite d₂), du diphosphonite de tétra-kis(2,4-di(t-butyl)-phényl)-4,4'-diphénylène.

5. Masses de moulage thermoplastiques suivant l'une des revendications 1 à 4, contenant, comme phénol à empêchement stérique d₁), du propionate d'octadécyl-3-(3,5-bis(t-butyl)-4-hydroxyphényle).

6. Masses de moulage thermoplastiques suivant l'une des revendications 1 à 5, contenant, comme composant C), un caoutchouc ABA non hydrogéné, où A représente un bloc vinylaromatique et B un bloc diénique.

7. Utilisation des masses de moulage thermoplastiques suivant l'une des revendications 1 à 6, pour la fabrication de fibres, de feuilles et de corps façonnés.

8. Corps façonnés, fibres et feuilles que l'on peut obtenir à partir des masses de moulage thermoplastiques suivant l'une des revendications 1 à 6.
